## Europäisches Patentamt

## European Patent Office

## Office européen des brevets

(19)

(11) Veröffentlichungsnummer: **0 024 297**
**B1**

(12)

# EUROPÄISCHE PATENTSCHRIFT

(45) Veröffentlichungstag der Patentschrift:
**21.09.83**

(51) Int. Cl.³: **A 23 L  1/22,** A 23 G  3/00

(21) Anmeldenummer: **80104076.7**

(22) Anmeldetag: **14.07.80**

(54) **Aromaprodukt mit protrahierter Aromawirkung, insbesondere für Kaugummi, Bonbons u. dgl. und Verfahren zu seiner Herstellung.**

(30) Priorität: **19.07.79  AT 5011/79**

(43) Veröffentlichungstag der Anmeldung:
**04.03.81 Patentblatt 81/9**

(45) Bekanntmachung des Hinweises auf die Patenterteilung:
**21.09.83 Patentblatt 83/38**

(84) Benannte Vertragsstaaten:
**BE CH DE FR GB IT LI LU NL SE**

(56) Entgegenhaltungen:
**CH-A-558 146**
**DE-A-2 444 677**
**DE-A-2 656 418**
**FR-A-2 287 858**
**GB-A-1 473 760**
**US-A-3 883 666**
**US-A-3 930 026**
**US-A-3 959 510**

(73) Patentinhaber: **Gergely, Gerhard, Dr., Gartengasse 8, A-1050 Wien (AT)**

(72) Erfinder: **Gergely, Gerhard, Dr., Gartengasse 8, A-1050 Wien (AT)**

(74) Vertreter: **Goddar, Heinz, Dr. et al, FORRESTER & BOEHMERT Widenmayerstrasse 4/I, D-8000 München 22 (DE)**

ACTORUM AG

Aromaprodukt mit protrahierter Aromawirkung, insbesondere für Kaugummi, Bonbons u.dgl., und
Verfahren zu seiner Herstellung

Die Erfindung betrifft ein Aromaprodukt mit protrahierter Aromawirkung, enthaltend wenigstens einen Aromastoff oder Geschmackstoffträger in einer organischen Matrix.

Derartige Aromaprodukte eignen sich insbesondere für die Anwendung für Kaugummi, Bonbons und andere ähnliche Produkte, bei denen eine solche protrahierte Aromawirkung angestrebt wird.

Es ist hinlänglich bekannt, Aromastoffe und Geschmackstoffträger zu versiegeln oder mikrozuverkapseln zu dem Zwecke, sie wasserunempfindlich oder haltbar zu machen. Im allgemeinen werden dafür Kolloide, wie Gummi Arabicum, Dextrin, Gelatine oder auch Kohlehydrate eingesetzt.

Beispielsweise ist aus der DE-A-2 656 418 bekanntgeworden, partikelförmige Geschmacks- und Duftmaterialien zur Fixierung der Aromastoffe in hydrophilen Materialien einzubetten. Als derartige Matrix hydrophiler Materialien werden hydrophile Kolloide, insbesondere Sacharide oder Kohlehydrate, wie Stärkehydrolysate, eingesetzt. Die dabei entstehenden partikelförmigen Geschmacks- und Duftmassen dienen zur Fixierung der Aromastoffe bei der Herstellung, verzögern jedoch nicht die Abgabe des Aromastoffes.

Das dort genannte Verfahren dient also lediglich der länger dauernden Lagerung und besseren Verarbeitung von Duft- und Geschmacksmassen, keineswegs jedoch einem speziellen Verhalten bei der Nahrungsaufnahme.

Aus der FR-A-2 287 858 sind beispielsweise für Kaugummi einsetzbare Aromazusammensetzungen bekanntgeworden, bei denen 3 bis 7 Gewichtsteile eines aromatischen hydrophoben freien Öls und 3 bis 7 Gewichtsteile eines hydrolysefreisetzbaren aromatischen Öls physikalisch in einem festen verdaubaren Material eingeschlossen werden. Es handelt sich also um eine Suspension auf einem freien aromatischen Öl, einem mit diesem organoleptisch verträglichen, durch Hydrolyse freisetzbaren aromatischen Öl sowie einem festen Suspendiermittel, wobei diese Zusammensetzung Kaugummi, Kautabak oder ähnlichem zugesetzt wird und eine verzögerte Freisetzung eines Teils der Aromastoffe ermöglicht. Diese Suspension ist jedoch in wasserlöslichen Stoffen eingekapselt, welche relativ leicht löslich sind.

Aus der US-A-3 930 026 sind hydrophile Kolloide, welche Aromastoffe für die Verwendung in Kaugummi enthalten, beschrieben. Dabei ist die Aufgabe dieser Publikation die Verbesserung bzw. Verstärkung des Geschmacks durch Zugabe von oberflächenaktiven Substanzen, wobei keineswegs eine verzögerte Abgabe des Aromas erreicht wird.

Aus der US-A-3 883 666 ist Kaugummi bekanntgeworden, welcher als Ersatz für Naturgummi Hydroxypropylstärkeacetat aufweist. Dieses Hydroxypropylstärkeacetat wirkt als Matrix für die Aromastoffe, wie es auch Naturgummi bei Kaugummi bewirkt, hat jedoch lediglich den Zweck, den teuren Naturstoff zu ersetzen, und keineswegs den, die Aromaabgabe zu verzögern.

Aus der US-A-3 959 510 sind Trübungsmaterialien für künstliche Fruchtsäfte bekannt, welche lediglich der Trübung und nicht der Aufnahme von Aroma dienen.

Demgegenüber ist bei vielen Zuckerwaren, wie Bonbons und insbesondere Kaugummi, die Verlängerung der Wirkung von Aromastoffen an den Geschmackssensoren problematisch, weshalb beispielsweise Pfefferminzkaugummi nach wenigen Minuten Kauen geschmacklos werden und fade schmecken. Für diese Erscheinung ist nicht nur eine rasche Auflösung der Aromastoffe und eine schnelle Abführung durch den Mund und den Speichel verantwortlich, sondern auch eine sehr rasche Gewöhnung der Geschmacksnerven an bestimmte Aromen schuld, so dass trotz gleichbleibender Geschmackskonzentration eine verminderte Wahrnehmungsfähigkeit für einen Abfall an Geschmacksintensität sorgt.

Insbesondere bei Kaugummi ist dieses Phänomen besonders zu beachten, da durch das Kauen die Speichelproduktion besonders angeregt wird und für eine rasche Entfernung von Geschmacksstoffen aus der Mundhöhle sorgt und zum zweiten diese oft verwendeten Pfefferminzöle besonders geschmacksnarkotisierend sind, so dass alsbald ein Verschwinden des Geschmacks festgestellt wird.

Spezielle Versuche, die Geschmackingredienzen zu verstärken und zu verändern, führen sehr oft zu einem gegenteiligen Effekt. Durch ein erhöhtes Angebot an Geschmacksstoffen findet eine Desensibilisierung der Geschmacksnerven umso früher statt.

Ziel der vorliegenden Erfindung ist es, Geschmacksstoffe aller Arten an im wesentlichen wasserunlösliche oder schwer bzw. langsam wasserlösliche Matrix einzubauen, aus welcher der Geschmacksstoff im Laufe der Zeit eluiert wird.

Die Erfindung betrifft danach ein Aromaprodukt mit protrahierter Aromawirkung, enthaltend wenigstens einen Aromastoff oder Geschmacksstoffträger in einer organischen Matrix, bei dem die Matrix aus wenigstens einem wasserunlöslichen oder schwer bzw. langsam wasserlöslichen Stoff der Gruppe organischer polymerer Stoffe und/oder Naturharze oder Naturharzderivate, in die gegebenenfalls ein Weichmacher eingebettet ist und die gegebenenfalls eine den Penetrationsfaktor steuernde Substanz enthält, besteht, und dass die den Aromastoff oder Geschmacksstoffträger enthaltende Matrix gegebenenfalls in einer die Penetration verzögernde Umhüllungsschicht eingeschlossen ist.

Ferner betrifft die Erfindung ein Verfahren zur Herstellung eines Aromaproduktes der vorgenannten Art, welches dadurch gekennzeichnet ist, dass man ein Gemisch, bestehend aus wenigstens einem Aromastoff oder Geschmackstoffträger, einem wasserunlöslichen oder schwer bis langsam wasserlöslichen Stoff der Gruppe organische polymere Stoffe und/oder Naturharze oder Derivate hiervon und gegebenenfalls einem Weichmacher in einem organischen Lösungsmittel in Lösung bringt, wobei gegebenenfalls zugesetzte wasserlösliche, den Penetrationsfaktor steuernde Substanzen in der Lösung gelöst oder suspendiert enthalten sein können, die resultierende Lösung der Dünnschichtverdampfung und/oder Trocknung im Vakuum unterwirft und das erhaltene Trockenprodukt zerkleinert und anschliessend gegebenenfalls in eine die Penetration verzögernde Umhüllungsschicht einschliesst.

Vorzugsweise besitzt wenigstens einer der die Matrix bildenden wasserunlöslichen oder schwer bzw. langsam wasserlöslichen Stoffe Adhäsionseigenschaften in der Mundhöhle, d.h. er ist befähigt, an den Mundschleimhäuten und Zähnen anzuhaften. Die Matrix kann daher aus einem einzigen Stoff mit solchen Adhäsionseigenschaften bestehen, vorzugsweise ist jedoch noch ein weiterer wasserunlöslicher oder schwer bzw. langsam wasserlöslicher Stoff am Aufbau der Matrix beteiligt, der keine Adhäsionseigenschaften in der Mundhöhle aufweist.

Der im Zusammenhang mit vorliegender Erfindung verwendete Ausdruck «schwer löslich» entspricht der Definition gemäss DAB 7, wonach eine schwer lösliche Substanz in 100–1000 Teilen Lösungsmittel löslich ist. Als praktisch unlöslich gelten gemäss DAB 7 Substanzen, die in mehr als 10 000 Teilen Lösungsmittel löslich sind. Unter «langsam löslich» sind Stoffe zu verstehen, wie beispielsweise Kolloide oder Pseudokolloide, die Wasser erst aufnehmen, sodann gegebenenfalls quellen und erst dann langsam in Lösung gehen.

Beispiele von für die erfindungsgemässen Zwecke bevorzugt brauchbaren, die Matrix bildenden wasserunlöslichen oder schwer bzw. langsam wasserlöslichen polymeren Stoffe sind solche der Gruppe, umfassend Cellulosederivate, wie Celluloseäther und Celluloseester, insbesondere Äthylcellulose, Benzylcellulose und Carboxymethylcellulose, Polymethacrylsäureester, Eiweissstoffe, Polyvinylalkohol, Polyvinylester, insbesondere die der unverzweigten Fettsäuren mit 2 bis 18 C-Atomen, Polyvinyläther, Polyisobutyläther, Polyisobutylen, Polyäthylen, Polypropylen und Butadien-Styrol-Copolymere. Die Aufzählung dieser bevorzugten Verbindungen schliesst jedoch die Verwendung anderer Stoffe mit ähnlichen Eigenschaften nicht aus. So können beispielsweise auch Alginsäurederivate, wie z.B. Alginsäurepropylester, zumindest einen Teil der Matrix bilden.

Im allgemeinen können alle bekannten, vom gesundheitlichen Standpunkt aus gesehen unbedenklichen wasserunlöslichen oder schwer bzw. langsam wasserlöslichen Polymere eingesetzt werden.

Bevorzugte, für die Matrix brauchbare Naturharze oder Naturharzderivate sind solche der Gruppe, umfassend Dammarharz, Kolophonium, Myrrhe, Olibanum, Mastix, Schellack, Benzolharz, Sandarak, Harzsäureester des Kolophoniums, wie insbesondere Glycerin- und Pentaerythritester, und Hydrierungsprodukte hievon.

Von den Gruppen der vorerwähnten Stoffe sind solche, welche Adhäsionseigenschaften besitzen, beispielsweise Kolophonium, Glycerin- oder Pentaerythritester von Harzsäuren, Dammarharz, Carboxymethylcellulose, bestimmte Polyvinylalkohole sowie bestimmte Eiweissstoffe, wie Gliadine und Zeine.

Fügt man einen solchen Haftstoff der Aromamatrix zu, denn bleiben Teilchen dieser Matrix an der Schleimhaut und an den Zähnen kleben und werden langsam eluiert, wodurch Geschmacksempfindungen, die mehrere Stunden andauern, erzielt werden können.

Vorzugsweise sind in die Matrix, bestehend aus den wasserunlöslichen oder schwer bzw. langsam wasserlöslichen Polymeren, zugleich Weichmacher eingebettet, wobei es bevorzugt ist, wenn diese Weichmacher zugleich als Lösungsmittel für die Aromen dienen.

Als Weichmacher kann irgendeiner der zahlreichen bekannten zweckentsprechenden Verbindungen dienen, wie z.B. Triacetin, Acetylmonoglycerid usw. Durch entsprechende Wahl des Verhältnisses von Polymer-Weichmacher und Geschmacksstoff kann man verschiedene retardierende Geschmacksempfindungen auslösen.

Wie erwähnt wurde, kann das erfindungsgemässe Aromaprodukt eine den Penetrationsfaktor steuernde Substanz enthalten. Unter «Penetrationsfaktor» ist die Zeit zu verstehen, die Wasser oder Speichel benötigt, um in das Innere der Matrix vorzudringen und den Aromastoff zu eluieren. Der Penetrationsfaktor kann durch in der Matrix feinstsuspendierte wasserlösliche Teilchen erhöht werden, so dass durch solche Substanzteilchen die Penetration reproduziert steuerbar ist.

Beispiele von Substanzen, welche zur Steuerung des Penetrationsfaktors geeignet sind, sind für Lebensmittelzwecke geeignete wasserlösliche Salze anorganischer oder organischer Säuren, wie Natriumphosphate, Natriumcitrat, Natriumtartrat, bei Raumtemperatur feste organische Säuren, wie Weinsäure und Citronensäure, Zucker, Emulgatoren usw.

Wenn man beispielsweise bei der Herstellung des Aromaproduktes dem die Matrix bildenden Gemisch geringe Mengen von Natriumphosphaten oder auch Zuckern in hochdisperser Form hinzufügt, so wird diese wasserlösliche Substanz für eine langsame Penetration des Speichels in die Matrix sorgen und die in der Matrix eingebetteten Aromastoffe langsam herauslösen.

Weiters kann erfindungsgemäss das aus einer wie oben beschriebenen Matrix, dem Aromastoff und gegebenenfalls einem Weichmacher und einer den Penetrationsfaktor steuernden Substanz gebildete Aromaprodukt in einer die Penetration verzögernden Umhüllungsschicht eingeschlossen sein, wodurch beispielsweise erreicht wird, dass die Eluierung der Geschmacksstoffe erst nach einem gewissen Zeitablauf beginnt. Es lässt sich dabei darstellen, dass eine solche Umhüllungsschicht einen logarithmischen Ablauf der Elution ermöglicht. Durch einen derartig exponential ansteigenden Elutionsmechanismus wird der Desensibilisierung der Geschmacksnerven entgegengewirkt.

Es sind daher erfindungsgemäss beispielsweise bei Bonbons oder Kaugummis unter Anwendung einer wie oben beschaffenen und in eine Umhüllungsschicht eingeschlossenen Matrix Geschmackskonstruktionen möglich, bei denen mit einem konventionellen Geschmack, z.B. Citrus, der wie üblich nach zwei Minuten abklingt, begonnen wird. Die nunmehr einsetzende Elution der die Umhüllungsschicht aufweisenden Matrix mit logarithmischem Verlauf lässt dem Geschmack von Citrus beispielsweise nach Pfefferminz umschlagen, wobei dieser Effekt zunächst langsam eintritt und je nach Steuerung der Matrix sodann schneller abläuft.

Beispiele von Stoffen, welche für die Bildung einer solchen Umhüllungsschicht herangezogen werden können und natürlich ebenfalls lebensmittelrechtlich zugelassen sein müssen, sind schmelzfähige Materialien oder wasser- bzw. speicherlösliche Materialien mit bei Körpertemperatur geringer Lösungsgeschwindigkeit, wie Wachse, Fette, Öle, Carboxymethylcellulose, Celluloseester, Dextrine, Polyvinylalkohole usw.

Es liegt in der Natur der Sache, dass die Herstellung solcher Verbundkörper technologisch nicht einfach ist.

In der pharmazeutischen Technologie sind Matrixstrukturen insbesondere an Festkörpern zum Zwecke der verzögerten Wirkstoffabgabe bekannt. Hier handelt es sich jedoch fast stets um feste Stoffe, die mittels Kolloiden unter Hochpolymeren versetzt und ummantelt werden, wobei vielfach Sprühverfahren oder reine Mischverfahren, die zumeist mit komplizierten Fällungsverfahren kombiniert sind, mit anschliessender Trocknung eingesetzt werden.

Solche Verfahren sind für die Herstellung von Geschmacksmatrixstrukturen der erfindungsgemässen Art grundsätzlich nicht anwendbar, da die Geschmacksstoffe zumeist flüssig sind und einen sehr niedrigen Dampfdruck aufweisen. Dazu kommt noch, dass die Matrixstrukturen aus einer Lösung heraus hergestellt werden, wobei das Lösungsmittel aus der erstarrenden Matrix verdampft werden muss und speziell in Anwesenheit von anderen flüssigen Substanzen zu technologisch schwer beherrschbaren Körpern führt.

Erfindungsgemäss werden diese Probleme überwunden, indem man die Matrix in der eingangs angegebenen Weise bildet.

Dabei werden die einzelnen Komponenten vorzugsweise bei der Siedetemperatur des Lösungsmittels gelöst und unlösliche Substanzen, wie z.B. Zucker, in dieser Lösung suspendiert, wonach man das Gemisch der Dünnschichtverdampfung und/oder der Trocknung im Vakuum unterwirft. Das aus der Dünnschichtverdampfung und/oder der Vakuumtrocknung anfallende Produkt kann sodann mit der die Penetration verzögernden Umhüllungsschicht versehen werden, indem man es in eine Schmelze eines für Lebensmittelzwecke zugelassenen schmelzfähigen Materials oder in eine wässerige Lösung eines für Lebensmittelzwecke geeigneten löslichen Materials mit bei Körpertemperatur geringer Lösungsgeschwindigkeit einrührt und hierauf die so erhaltene Suspension abkühlt und auf die gewünschte Teilchengrösse mahlt.

Die Erfindung wird durch die folgenden Beispiele, in welchen alle Teile auf das Gewicht bezogen sind, näher erläutert.

Beispiel 1

10 Teile Äthylcellulose werden in 30 Teilen Alkohol und 10 Teilen Methylenchlorid gelöst. Als Weichmacher werden 2 Teile Triacetin hinzugefügt. In diesem Triacetin kann bis zu 1 Teil Pfefferminzöl, Menthol, höhersiedende Orangenöle usw. und gegebenenfalls 1–2 Teile süsser Geschmackstoff, wie z.B. Zucker, Cyclaminsäure, o-Benzoesäuresulfimid, gelöst werden.

Die Lösung erfolgt bei Siedehitze und bei Einsatz eines Rührwerkes. Die viskose Lösung wird über einen langsam laufenden Trommeldünnschichtverdampfer spezieller Konstruktion geleitet und unmittelbar nach Verdampfung des Lösungsmittels von der Trommel abgehoben.

Beispiel 2

4 Teile Polymethacrylsäureester und 6 Teile Polymethacrylsäure werden in 30 Teilen Aceton bei der Siedehitze gelöst und 4 Teile Acetylmonoglycerid hinzugefügt. Im Acetylmonoglycerid sind wiederum eine Reihe von Aromen lösbar und dispergierbar.

Die viskose Masse wird über einen speziellen Dünnschichtverdampfer im Vakuum verdampft, wobei sich ein spröder Film ergibt, der mit konventionellen Mühlen gemahlen werden kann. Der Verlust an Aromastoffen beträgt 20 bis 30% je nach Dampfdruck der eingesetzten Geschmackstoffe.

Beispiel 3

Eine Matrix mit einer die Penetration verzögernden Umhüllungsschicht kann hergestellt werden, indem gewonnene Pulver nach Beispiel 1 oder 2 in geschmolzenen Fetten oder Wachsen in einem hochtourigen Rührwerk suspendiert werden und die Wachse nach Abkühlung gemahlen werden.

Beispiel 4

10 Teile Matrix nach Beispiel 1 oder 2 werden mit 10 Teilen geschmolzener Stearinsäure versetzt und intensiv mit Turbomischer gerührt. Die Masse wird erkaltengelassen und zu Teilchen von 1 oder 2 mm Grösse gemahlen.

Beispiel 5

Herstellung einer Matrix mit Klebeeffekt.

6 Teile Schellack werden mit 4 Teilen Zein vermischt und in 30 Teilen Äthanol zur Auflösung gebracht. In die Lösung bringt man 1–2 Teile Aromastoffe und gegebenenfalls 1–2 Teile süssen Geschmackstoff, wie z.B. Zucker, Cyclaminsäure, o-Benzoesäuresulfimid, ein und verdampft am Dünnschichttrockner. Auch hier resultiert eine spröde mahlfähige Masse, die starke Klebeeigenschaften an die Mundschleimhaut aufweist.

Beispiel 6

Herstellung einer Matrix mit einer die Penetration verzögernden Umhüllungsschicht aus dem vorhergehenden Beispiel:

10 Teile des Pulvers werden in eine konzentrierte wässrige Lösung von Carboxymethylcellulose eingerührt. Durch die Wasserunlöslichkeit der Matrix geht dies ohne Aromaverluste. Die entsprechende Suspension wird wiederum über den Dünnschichtverdampfer getrocknet, wobei die Carboxymethylcellulose die Suspensionsteilchen der Matrix umhüllt und für einen kurzzeitigen völligen Verschluss der Aromastoffe sorgt.

Beispiel 7

Herstellung einer Matrix mit vergrössertem Penetrationsfaktor:

10 Teile Äthylcellulose werden in 30 Teilen Aceton und 10 Teilen Methylenchlorid gelöst. Nach Auflösung werden 2 Teile Menthol hinzugefügt und 0,3 Teile mikronisierter Zucker suspendiert. Das Gemisch wird am Dünnschichtverdampfer in dünnem Film verdampft, wobei die Suspension durch hochtouriges Rühren aufrechterhalten werden muss.

Beispiel 8

10 Teile Polymethacrylsäureester werden in 35 Teilen Aceon gelöst und in die viskose Lösung ein Teil ätherisches Öl, 0,5 Teile Emulgator Tween 20 oder Tween 80 sowie ein Teil Erdnussöl hinzugefügt. Die Masse wird am Dünnschichtverdampfer verdampft. In diesem Fall dient das Öl mit dem Emulgator als Penetrationshilfe und Verkürzung der Eluierungszeit.

Beispiel 9

Herstellung ohne Dünnschichtverdampfer.

10 Teile Äthylcellulose und 1 Teil Dibutylphthalat werden in 25 Teilen Aceton, 5 Teilen Äthanol und 10 Teilen Methylenchlorid gelöst. Man fügt 0,5 bis 1 Teil Geschmackstoff hinzu und erhitzt im Vakuumkessel auf 50 °C. Unter Anlegung von etwa 100 mbar Vakuum wird verdampft, wobei die nach Verdampfen schaumige Masse durch gelegentliches Brechen des Vakuums entschäumt wird. Nach völligem Trocknen bis 10 mbar kann die entstehende Masse gemahlen werden.

Beispiel 10

10 Teile Polyvinylalkohol mit 1 Teil Polyvinylacetat werden in 30 Teilen Isopropanol gelöst und 1 Teil Menthol hinzugefügt. Zur verbesserten Penetration werden mit hochtourigem Mischer 0,2 bis 0,5 Teile mironisiertes Trinatriumphosphat eingebracht. Die Masse wird am Dünnschichtverdampfer getrocknet und gemahlen.

Beispiel 11

10 Teile Zein werden in 25 Teilen Methanol gelöst und 3 Tile Menthol nach völliger Lösung ebenfalls aufgelöst.

Als Weichmacher können zugesetzt werden 0,5 bis 2 Teile Dibutylphthalat. Als Penetrationsbeschleuniger 1 bis 5 Teile Hydroxypropylmethylcellulose.

Die Lösung wird am Dünnschichtverdampfer getrocknet und das Endprodukt gemahlen.

Beispiel 12

6 Teile Kolophonium werden in 4 Teilen Alkohol gelöst und mit 0,1 bis 0,5 Teilen Glycerin versetzt. In die Lösung werden 1 bis 2 Teile Menthol eingebracht und am Dünnschichtverdampfer getrocknet. In ähnlicher Weise können andere Harze, wie Dammarharze, Myrrhe, Olivanum, Mastix, Benzoharz sowie die Ester der Harzsäure und deren Hydrierungsprodukte verarbeitet werden.

Beispiel 13

3 Teile Polyvinylacetat werden in 7 Teilen Methylenchlorid aufgelöst und je nach gewünschter Geschmeidigkeit 1 bis 3 Teile Polyisobutylen hinzugefügt. Zur Erhöhung der Klebekraft können Glycerin- oder Pentaerythritester von Harzsäuren oder Kolophonium hinzugefügt werden. In die Lösung werden 2 Teile hochsiedendes terpenfreies Orangenöl eingebracht und am langsam laufenden Dünnschichtverdampfer zum Film getrocknet.

Beispiel 14

Eine Mischung von Polyvinyläther und Polyvinylisobutyläther wird mit 2 Teilen Triacetin versetzt und mit 5 Teilen Aceton in der Siedehitze aufgelöst. Nach Hinzufügen von einem Teil Citral wird am Dünnschichttrockner vom Lösungsmittel verdampft.

Beispiel 15

2 Teile Isobutylen-isopren-kopolymerisat werden mit 3 Teilen Kolophonium in 2 Teilen Alkohol und 2 Teilen Aceton zur Lösung gebracht. Nach völligem Auflösen fügt man 2 Teile Wintergrünöl hinzu und verdampft am Dünnschichttrockner.

Beispiel 16

2 Teile niedrig polymeres Polyäthylen werden in 3 Teilen Tetrachlorkohlenstoff und 4 Teilen Trichloräthylen gelöst und 0,5 Teile Polyäthylenglycol zugesetzt. Nach Zufügen von 0,4 Teilen Menthol wird am Dünnschichttrockner verdampft und zu gewünschten Teilen vermahlen.

**Patentansprüche**

1. Aromaprodukt mit protrahierter Aromawirkung enthaltend wenigstens einen Aromastoff oder Geschmackstoffträger in einer organischen Matrix, dadurch gekennzeichnet, dass die Matrix aus wenigstens einem wasserunlöslichen oder schwer bzw. langsam wasserlöslichen Stoff der Gruppe organischer polymerer Stoffe und/oder Naturharze oder Naturharzderivate, in die gegebenenfalls ein Weichmacher eingebettet ist und die gegebenenfalls eine den Penetrationsfaktor steuernde Substanz enthält, besteht, und dass die den Aromastoff oder Geschmackstoffträger enthaltende Matrix gegebenenfalls in einer die Penetration verzögernde Umhüllungsschicht eingeschlossen ist.

2. Aromaprodukt nach Anspruch 1, dadurch gekennzeichnet, dass der polymere Stoff aus der Gruppe umfassend Celluloseäther, Celluloseester, Polymethacrylsäure und Polymethacrylsäureester, Eiweissstoffe, Polyvinylalkohol, Polyvinylester, Polyvinyläther, Polyvinylisobutyläther, Polyisobutylen, Polyäthylen, Polypropylen, ausgewählt ist.

3. Aromaprodukt nach Anspruch 1, dadurch gekennzeichnet, dass das Naturharz oder Derivat davon aus der Gruppe umfassend Dammarharz, Kolophonium, Myrrhe, Olibanum, Mastix, Schellack, Benzolharz, Sandarak, Harzsäureester des Kolophoniums, Glycerin- und Pentaerythritester des Kolophoniums und Hydrierungsprodukte hiervon, ausgewählt ist.

4. Aromaprodukt nach einem der Ansprüche 1 bis 3, dadurch gekennzeichnet, dass wenigstens einer der die Matrix bildenden wasserunlöslichen oder schwer bzw. langsam löslichen Stoffe aus der Gruppe umfassend Dextrine, Gliadine, Zeine, Dammaharz, Carboxymethylcellulose und Polyvinylalkohol ausgewählt ist.

5. Aromaprodukt nach einem der Ansprüche 1 bis 4, dadurch gekennzeichnet, dass es als Weichmacher eine zugleich als Lösungsmittel für den Aromastoff oder Geschmackstoffträger fungierende Substanz enthält.

6. Aromaprodukt nach einem der Ansprüche 1 bis 5, dadurch gekennzeichnet, dass die den Penetrationsfaktor steuernde Substanz Zucker, eine bei Zimmertemperatur feste wasserlösliche organische Lebensmittelsäure, ein wasserlösliches Salz hiervon oder ein wasserlöslicher Emulgator ist.

7. Aromaprodukt nach einem der Ansprüche 1 bis 6, dadurch gekennzeichnet, dass es in eine Umhüllungsschicht aus Wachsen oder Fetten eingeschlossen ist.

8. Aromaprodukt nach einem der Ansprüche 1 bis 7, dadurch gekennzeichnet, dass es in eine Umhüllungsschicht aus einem bei Körpertemperatur eine geringe Lösungsgeschwindigkeit aufweisenden polymeren Stoff, besonders wasserlösliche Eiweissstoffe, Celluloseäther und Celluloseester eingeschlossen ist.

9. Verfahren zur Herstellung eines Aromaproduktes nach den Ansprüchen 1 bis 8, dadurch gekennzeichnet, dass man ein Gemisch bestehend aus wenigstens einem Aromastoff oder Geschmackstoffträger, einem wasserunlöslichen oder schwer bis langsam wasserlöslichen Stoff der Gruppe organische polymere Stoffe und/oder Naturharze oder Derivate hiervon und gegebenenfalls einem Weichmacher in einem organischen Lösungsmittel in Lösung bringt, wobei gegebenenfalls zugesetzte wasserlösliche, den Penetrationsfaktor steuernde Substanzen in der Lösung gelöst oder suspendiert enthalten sein können, die resultierende Lösung der Dünnschichtverdampfung und/oder Trocknung im Vakuum unterwirft und das erhaltene Trockenprodukt zerkleinert und anschliessend gegebenenfalls in eine die Penetration verzögernde Umhüllungsschicht einschliesst.

10. Verfahren nach Anspruch 9, dadurch gekennzeichnet, dass man das aus der Dünnschichtverdampfung und/oder Vakuumtrocknung erhaltene Produkt in eine Schmelze eines für Lebensmittelzwecke zugelassenen schmelzfähigen Materials oder in eine wässrige Lösung eines für Lebensmittelzwecke geeigneten löslichen Materials mit bei Körpertemperatur geringer Lösungsgeschwindigkeit einrührt und hierauf die so erhaltene Suspension abkühlt und auf die gewünschte Teilchengrösse mahlt.

**Claims**

1. An aromatic product having a protracted aromatic action and containing at least one aromatic substance or flavouring in an organic matrix, characterised in that the matrix consists of at least one water-insoluble or difficultly or slowly water-soluble substance of the group of organic polymeric substances and/or natural resins or natural resin derivatives in which, if required, a plasticizer is embedded and which, if required, contains a substance which controls the penetration factor, and the matrix containing the aromatic substance or flavouring is, if required, enclosed in a wrapping layer which delays the penetration.

2. An aromatic product according to claim 1, characterised in that the polymeric substance is selected from the group comprising cellulose ether, cellulose ester, polymethacrylic acid and polymethacrylic acid ester, albumins, polyvinyl alcohol, polyvinyl ester, polyvinyl ether, polyvinyl isobutyl ether, polyisobutylene, polyethylene, and polypropylene.

3. An aromatic product according to claim 1, characterised in that the natural resin or derivative thereof is selected from the group comprising dammar resin, colophony, myrrh, olibanum, mastic, shellac, benzene resin, sandarac, resinic acid ester of colophony, glycerine and pentaerythrite ester of colophony and hydrogenation products thereof.

4. An aromatic product according to any one of claims 1 to 3, characterised in that at least one of the water-insoluble or difficultly or slowly soluble substances forming the matrix is selected from the group comprising dextrin, gliadin, zein, dammar resin, carboxymethyl cellulose and polyvinyl alcohol.

5. An aromatic product according to any one of claims 1 to 4, characterised in that the plasticizer it contains is a substance which also acts as a solvent for the aromatic substance or flavouring.

6. An aromatic product according to any one of claims 1 to 5, characterised in that the substance controlling the penetration factor is sugar, a water-soluble organic food acid which is solid at room temperature, a water-soluble salt thereof or a water-soluble emulsifier.

7. An aromatic product according to any one of claims 1 to 6, characterised in that it is enclosed in a wrapping layer of waxes or fats.

8. An aromatic product according to any one of claims 1 to 7, characterised in that it is enclosed in a wrapping layer consisting of a polymeric substance having a low rate of solution at body temperature, more particularly water-soluble albumins, cellulose ether and cellulose ester.

9. A method of producing an aromatic product according to claims 1 to 8, characterised in that a mixture consisting of at least one aromatic substance or flavouring, a water-insoluble or difficultly to slowly water-soluble substance of the group of organic polymeric substances and/or natural resins or derivatives thereof and, if required, a plasticizer is dissolved in an organic solvent, while if required added water-soluble substances controlling the penetration factor may be contained in solution or suspension in the solution, the resulting solution is subjected to thin-film vaporization and/or drying in vacuo and the resulting dry product is comminuted and then, if required, enclosed in a wrapping layer which delays the penetration.

10. A method according to claim 9, characterised in that the product obtained from the thin-film vaporization and/or vacuum drying is stirred into a melt of fusible material permitted for food purposes or into an aqueous solution of a soluble material suitable for food purposes and having a low rate of dissolution at body temperature, and then the resulting suspension is cooled and ground to the required particle size.

## Revendications

1. Produit aromatique à effet aromatique prolongé, contenant au moins une matière aromatique, ou un véhicule de saveur, dans une matrice, caractérisé par le fait que la matrice est constituée d'au moins une matière insoluble ou difficilement ou lentement soluble dans l'eau, du groupe des matières polymères organiques et/ou résines ou dérivés de résines naturelles, dans laquelle est éventuellement enrobé un plastifiant, et qui contient éventuellement une substance commandant le facteur de pénétration, et la matrice contenant la matière aromatique ou le véhicule de saveur est éventuellement incluse dans une couche enveloppe retardant la pénétration.

2. Produit aromatique selon la revendication 1, caractérisé par le fait que la matière polymère est choisie dans le groupe comprenant les éthers cellulosiques, esters cellulosiques, acide polyméthacrylique et esters d'acide polyméthacrylique, protides, alcool polyvinylique, polyvinylester, polyvinyléther, polyvinylisobutyléther, polyisobutylène, polyéthylène, polypropylène.

3. Produit aromatique selon la revendication 1, caractérisé par le fait que la résine naturelle ou un dérivé de cette résine est choisi dans le groupe comprenant les résines de dammar, colophane, myrrhe, oliban, mastic, gomme laque, résine benzénique, résine de sandaraque, ester d'acide résinique de la colophane, ester de glycérol et de pentaérythrite de la colophane et leurs produits d'hydrogénation.

4. Produit aromatique selon l'une des revendications 1 à 3, caractérisé par le fait que l'une au moins des matières insolubles ou difficilement ou lentement solubles formant la matrice est choisie dans le groupe comprenant dextrine, gliadine, zeine, résine de dammar, carboxyméthylcellulose et polyvinylalcool.

5. Produit aromatique selon l'une des revendications 1 à 4, caractérisé par le fait qu'il contient, comme plastifiant, une substance se comportant également comme solvant pour la matière aromatique ou le véhicule de saveur.

6. Produit aromatique selon l'une des revendications 1 à 5, caractérisé par le fait que la substance commandant le facteur pénétration est du sucre, un acide alimentaire organique, soluble dans l'eau, solide à la température ambiante, un sel, soluble dans l'eau, de cet acide ou un émulsifiant soluble dans l'eau.

7. Produit aromatique selon l'une des revendications 1 à 6, caractérisé par le fait qu'il est inclus dans une couche enveloppe en cires ou graines.

8. Produit aromatique selon l'une des revendications 1 à 7, caractérisé par le fait qu'il est inclus dans une couche enveloppe en une matière polymère présentant une faible vitesse de dissolution à la température du corps, en particulier protide soluble dans l'eau, éther cellulosique et ester cellulosique.

9. Procédé de préparation d'un produit aromatique selon l'une des revendications 1 à 8, caractérisé par le fait qu'on met en solution, dans un solvant organique, un mélange constitué d'au moins une matière aromatique ou véhicule de saveur, une matière insoluble ou difficilement ou lentement soluble dans l'eau, du groupe des matières polymères organiques et/ou résines ou dérivés de résines naturelles et éventuellement un plastifiant, la solution pouvant éventuellement contenir, dissoutes ou en suspension, des substances additives, solubles dans l'eau, commandant le facteur de pénétration, on soumet la solution résultante à la vaporisation en couche mince et/ou au séchage sous vide et on broie le produit sec obtenu, et enfin on l'inclut éventuellement dans une couche enveloppe retardant la pénétration.

10. Procédé selon la revendication 9, caractérisé par le fait qu'on introduit, en agitant, le produit, obtenu après vaporisation en couche mince et/ou séchage sous vide, dans une masse fondue de matière fusible convenant à l'usage alimentaire ou dans une solution aqueuse d'une matière soluble appropriée aux usages alimentaires et d'une faible vitesse de dissolution à la température du corps, puis on refroidit la suspension ainsi obtenue et on la moud jusqu'à obtention de la grosseur de particules souhaitée.